# EUROPEAN PATENT APPLICATION

(11) **EP 2 299 312 A1**
(43) Date of publication of application: **23.03.2011**
(21) Application number: 10174069.4
(22) Date of filing: 26.08.2010
(51) Int. Cl.: G02F 1/01, G01J 1/04, G02B 5/23

(54) **Light excited limiting window**

(30) Priority: 26.08.2009 US 236910 P
(71) Applicant: Kilolambda Technologies Ltd., 61580 Tel-Aviv (IL)
(72) Inventor: Donval, Ariela, 48550, Rosh-Haayin (IL); Nemet, Boaz, 62006, Tel-Aviv (IL); Masliah, Tali Fisher, 58394, Holon (IL); Nevo, Doron, 43563, Ra'anana (IL); Oron, Moshe, 76404, Rehovot (IL)
(74) Representative: Grünecker, Kinkeldey, Stockmair & Schwanhäusser Anwaltssozietät

(57) **Abstract**

An optical power limiter comprises an input optical transmission element, an output optical transmission element, and a power-limiting element disposed between the input and output elements for transmitting optical signals from the input element to the output element. The power-limiting element comprises an optical-limiting solid mixture containing particles of at least one material that produces reversible thermal changes in response to light above a predetermined optical power level, thereby changing the optical transmission properties of the power-limiting element.

## Description

### FIELD OF THE INVENTION

The present invention relates to a light limiting device, and more particularly, to a light limiting passive device and to a method for limiting light transmission through large area windows. The system uses broadband concentrated light at or near a crossover in the system where part of the spectrally broadband light excites a limiting material and brings it to a state that absorbs the broadband light.

### BACKGROUND OF THE INVENTION

Optical limiters are devices designed to have high transmittance for low-level light inputs and low transmittance for high optical power. Since the development of the first lasers, passive optical limiters have been researched and concepts have been tested to protect optical sensors against laser peak-power induced damage. The first optical limiters for CW lasers were based on thermal lensing in absorbing bulk liquids, i.e., local heating in an imaging system reduced the index of refraction, causing "thermal blooming" and resulting in a beam that was no longer focused. Other methods have been suggested for limiting pulsed laser sources such as reverse saturable absorption, two-photon and free carrier absorption, self-focusing, nonlinear refraction and induced scattering.

Communications and other systems in medical, industrial and remote sensing applications, may handle relatively high optical powers, from microwatts up to several watts, in single fibers or waveguides. With high intensities (power per unit area) introduced into these systems, many thin film coatings, optical adhesives, and even bulk materials, are exposed to light intensity beyond their damage thresholds. Another problem is laser safety, wherein there is well-defined upper limit on the amount of power allowed to be emitted from fibers into the open air. These two issues called for a passive device that limits the amount of energy propagating in a fiber/waveguide to the allowed level, and such passive devices were realized and described in U.S. patent applications Serial Nos. 60/725,357 and 10/398,859 assigned to KiloLambda Technologies, Ltd., using nanostructures and nanoparticles as non-linearity enhancing media.

Another U.S. patent application assigned to Kilolambda Technologies, Ltd., Serial No. 61/075,073, refers to limiters that are created by thermal gradients.

There have been many attempts to realize optical limiters, mainly for high power laser radiation, high power pulsed radiation, and eye safety devices. The techniques used in these devices have been mainly:
1) Thermal change of the index of refraction *n*, in liquids having negative d*n*/dT, for defocusing the light beam, e.g., in an imaging system.
2) Self-focusing or self-defocusing, due to high electric field-induced index of refraction *n* change, through the third order susceptibility term of the optical material, here *n=n₀*+*n₂E²* where *n₀* is the index of refraction at zero electric field (no light), *n₂* is the non-linear index change and *E* is the electric field strength of the light beam.
3) Colloidal Suspensions such as carbon black in both polar and nonpolar solvents, which limit by induced scattering.

Both No. 1 and No. 2 of the above-mentioned techniques, require very energetic laser beams or light intensities to produce a meaningful limitation. In the first technique, the volumes of liquid to be heated are large and need high powers. Another problem with this method is that the liquid is not a good optical medium and distorts the beam. In the second technique, the *n*₂ coefficient is very small for usable materials and requires very high electric fields and limits light only at very high powers.

Limiting of relatively low optical powers, such as exist in lamp, diode or sun light, but not laser light, requires novel methods and mechanisms of limiting as well as novel geometries and optical ray passage.

### SUMMARY OF THE INVENTION

It is therefore a broad object of the present invention to provide an optical power-limiting device and a method for limiting power transmission, which ameliorates the disadvantages of the prior devices and methods.

In accordance with one embodiment, an optical power-limiting device comprises an optical-limiting solid or liquid mixture placed in the optical path of an optical system, near or at a focal point where light concentration is high. The transmission properties of the optical-limiting solid or liquid mixture are affected by absorption of part of the impinging broad spectrum light in a certain typical wavelength band. This absorption excites the optical-limiting solid or liquid mixture to a level having absorption of the majority of the impinging light. The absorption due to excitation induces changes in the amount of light passing through the optical-limiting solid or liquid mixture. When the impinging light energy is reduced, the absorption due to excitation is reduced, and the transparency returns to its initial value.

Examples of suitable optical limiting materials are:
1. Reversacol Graphite dye of James Robinson GMBH, absorbing in the UV and changes its color into gray, absorbing in the visible light,
2. Blue BL-60C dye of Kelly Chemical Corp., absorbing in the UV and changes its color into blue, thus absorbing in the red, and
3. Red RL-30D dye of Kelly Chemical Corp., absorbing in the UV and changes its color into red, thus absorbing in the blue.

The light induced optical-limiting solid mixture is dispersed in a transparent matrix, e.g., in a monomer which is subsequently polymerized. There are many techniques for preparing such dispersions, such as with the use of dispersion and deflocculation agents added to the monomer mix.

The light induced optical-limiting liquid mixture can be inserted within a special liquid cell, which are in common use.

In another embodiment, an optical power-limiting method comprises directing a light beam having a range of different wavelengths through transparent optical input and output elements on opposite sides of a power-limiting element, the input element focusing the light beam, and the output element defocusing the light beam, the input and output elements having a common focus located within the power limiting element, and the power-limiting element being responsive to an increase in the intensity of certain wavelengths in the light beam to modify the absorption characteristics of the power-limiting element to absorb other wavelengths in the light beam, thereby limiting the optical power transmitted to the output element.

The optical power-limiting device or method can offer the following advantages and properties:
1. The operation of the limiter-window is passive; no external electrical power is required.
2. The limiter-window operates for many cycles (e.g., tens of thousands), limiting at high input powers and returning to its original, non-limiting state when the input light power is lowered or shut off.
3. The limiter-window may be operated for a wide range of wavelengths, e.g., visible, or near infrared, and activated by a part of the solar spectrum.
4. The limiter-window withstands high intensities.
5. The limiter-window has relatively fast (e.g., seconds region or less) response.
6. The limiter in this invention has a low limiting threshold and is suitable for, e.g., solar light compared to other methods that operate only for high power lasers.
7. The limiter-window has high light transmission (e.g., 1-3 dB insertion loss) at intensities below the power limit.
8. The limiter-window is suitable for use as a large window pane.
9. The limiting-device is suitable for camera use as an external add-on.
10. The limiting-device, in film form, is suitable for implementation within cameras, limiting only the high light intensity sources and leaving the rest of the picture unlimited.

Some uses of the limiter-window may be in the construction and vehicle industry, e.g., in limiting the amount of solar light through windows and sunroofs; in transmittance control of solar light into cars, airplanes or other forms of transportation through windows and sunroofs; in optical large aperture devices such as mirrors, e.g., rear view mirrors in cars; and in cameras, for taking pictures toward the sun.

### BRIEF DESCRIPTION OF THE DRAWINGS

The invention will now be described in connection with certain preferred embodiments with reference to the following illustrative figures so that it may be more fully understood.

With specific reference now to the figures in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention.

In the drawings:

FIG. 1 is a cross-sectional view of one embodiment of a limiter-window device.

FIG. 2 is a cross-sectional view of a limiter-window device and its limiting action.

FIG. 3 is cross-sectional view of a telescope mounted limiter-window device.

FIG. 4 is cross-sectional view of a telescope mounted limiter-window device, showing the attenuation of high intensity sources.

FIG. 5 is cross-sectional view of a camera mounted limiter-window device.

FIG. 6 is a cross-sectional view of an optical-limiting solid mixture placed at the focus of a lens of an optical system with a light-collecting lens of given numerical aperture, according to the present invention.

FIG. 7 is a cross-sectional view of an optical-limiting solid mixture placed at the focus of a lens of an optical system with a light-collecting lens of given numerical aperture, with the optical-limiting solid mixture oriented at an angle to eliminate back reflection, according to the present invention.

FIG. 8 is a cross-sectional view, of an optical-limiting system in which protection is provided from all angles.

FIG. 9 is an end elevation of the structure of FIG. 8.

### DETAILED DESCRIPTION OF PREFERRED EMBODIMENTS

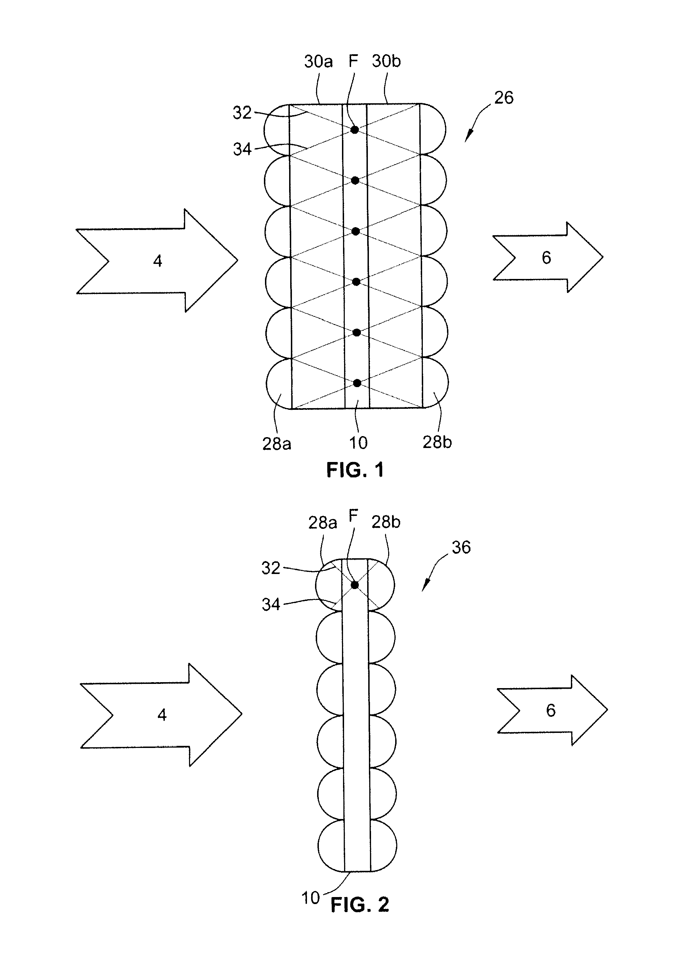

FIG. 1 is a cross-sectional view of a micro lens structure 26 where an input micro lens array 28a is the first surface impinged by a light beam 4. From the lens array 28a, the light from each lenslet in the array 28a continues along rays 32 and 34 toward a focus inside an optical power-limiting solid or liquid mixture 10. The increased light intensity at the focus F creates effects in the optical-limiting solid or liquid mixture 10, which is composed of transparent optical material (e.g., transparent to the solar light spectrum) that, when excited by UV or IR radiation, becomes absorbing to a major part of the impinging light beam (e.g. the visible and near IR parts of the solar spectrum). The optical-limiting function begins with some light absorption (e.g., an absorption band within the solar wavelength band) in the material, exciting it to an absorbing level, according to the material absorption spectra, and continues to absorb more parts of the broad impinging spectrum. Only part of the impinging light, in this case, will reach an output micro lens array 28b and exit in direction 6. The light that is not absorbed by the optical-limiting material continues along the optical path and has lower, "limited" power.

Examples of suitable optical-limiting materials are photochromic materials such as:
a. Reversacol Graphite dye of James Robinson GMBH, absorbing in the UV and changes its color into gray, absorbing in the visible light,
b. Blue BL-60C dye of Kelly Chemical Corp., absorbing in the UV and changes its color into blue, thus absorbing in the red, and
c. Red RL-30D dye of Kelly Chemical Corp., absorbing in the UV and changes its color into red, thus absorbing in the blue.

When the power of the incident beam 4 is reduced, the absorption of the limiting material 10 is also reduced. The transmission through the optical-limiting solid or liquid mixture 10 returns to its original value, as the absorbing process decreases to negligible values. The process may be repeated many times without any permanent damage up to energies that are an order of magnitude or more, larger than the transmitted power limit.

In the illustrative embodiment of FIG. 1, spacers 30a and 30b are introduced between each lenslet array 28a and 28b and the optical-limiting solid or liquid mixture 10. The spacers 30a, 30b can be made of solid transparent material, e.g., glass of gas transparent material, e.g., air.

The lenslet arrays 28a, 28b can be mounted directly on the optical-limiting solid or liquid mixture 10, as illustrated in FIG. 2, where the common foci F of the two lenslet arrays 28a, 28b are in the optical-limiting solid or liquid mixture 10 as shown on the cross over of rays 32 and 34.

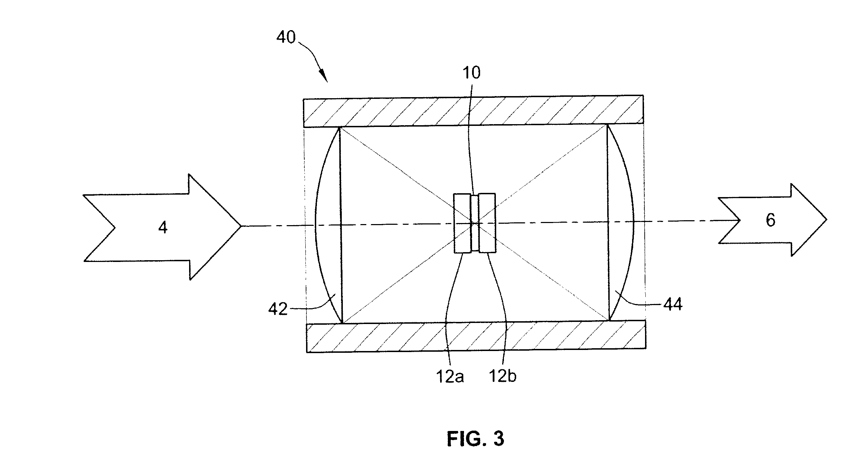

FIG. 3 illustrates a limiter mounted in the crossover of a single inverting telescope 40 where a light beam 4 impinges on a lens 42, focused on an optical-limiting solid or liquid mixture 10 placed between two plates 12a and 12b. The increased light intensity at the focus creates effects in the optical-limiting solid or liquid mixture 10, which is composed of transparent optical material (e.g., transparent to the solar light spectrum) that when excited by UV or IR radiation becomes absorbing to the major part (e.g., the visible and near IR parts of the solar spectrum). The polymer host material, may be: PMMA, silicones or their derivatives, polymer based on epoxy resins, glass, spin on glass (SOG) or other sol-gel materials. The optical-limiting function begins with some light absorption (e.g. within the solar wavelength band) in the material, exciting it to an absorbing level, according to the material absorption spectra and continues to absorb more parts of the spectrum. Only part of the impinging light, in this case, will reach the opposite lenslet 28 and will exit in direction 6. The light that is not absorbed by the mixture 10 continues along the optical path and has lower, "limited" power. When the power of the incident beam 4 is reduced, the absorption of the limiting material 10 is reduced. The transmission through the optical-limiting solid or liquid mixture 10 returns to its original value, as the absorbing process decreases to negligible values. The process may be repeated many times without any permanent damage up to energies that are an order of magnitude or more, larger than the transmitted power limit.

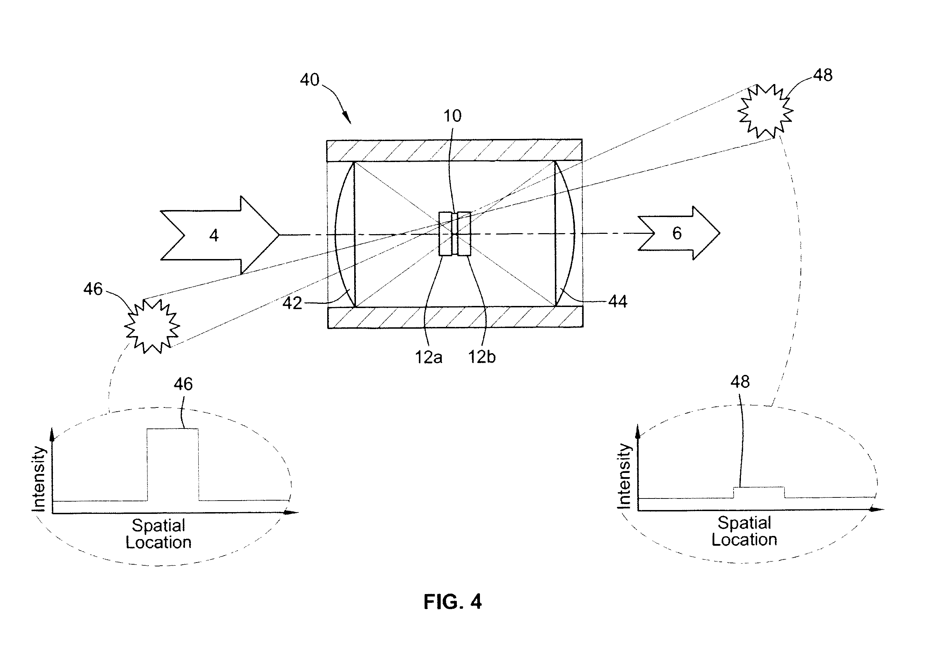

In the image plane, points corresponding to high intensity object points 46 are reduced to lower intensity points 48, whereas all other points remain unchanged, as illustrated in FIG. 4. This phenomenon occurs due to the placement of the optical-limiting solid or liquid mixture 10 in the focus or Fourier transform plane of the lens 42.

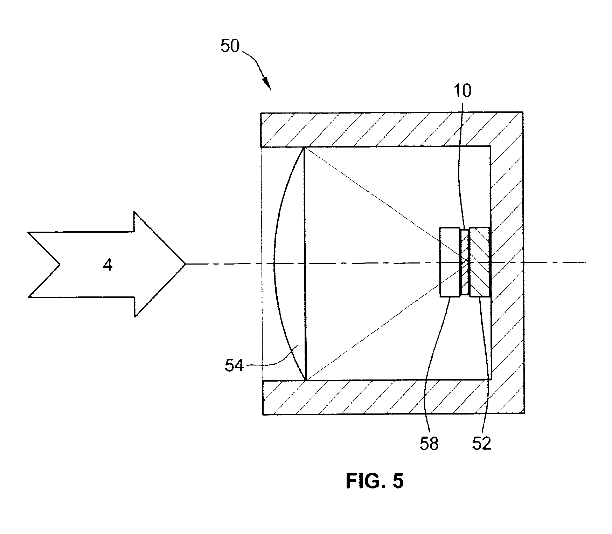

FIG. 5 illustrates the placement of the limiter in a sensor (e.g., CCD or CMOS) camera 50, where the input beam 4 passes through a lens 54 on its way to the CCD or CMOS sensor 52. The optical-limiting solid or liquid mixture 10 is placed near the focal location and is covered by a protection transparent cover 58.

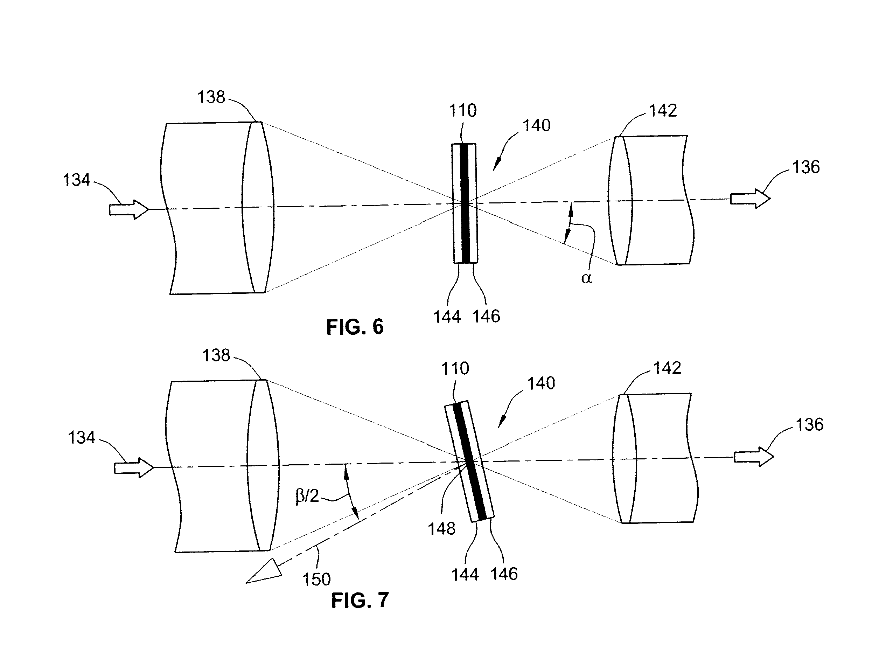

FIG. 6 illustrates a free space optical limiter in which light enters from the left side as a prime incident ray 134. The incident light is focused by a condensing lens 138 onto the optical-limiting solid mixture 110. Optional entrance and exit windows 144 and 146 are shown with the optical-limiting solid mixture 110 sandwiched in between. The optical-limiting solid mixture and its windows form an optical-limiting assembly 140. Scattered light at an angle greater than α is not collected by a collecting lens 142. The exit ray 136 represents the limited optical output.

FIG. 7 is a variation of the embodiment shown in FIG. 6 in which the optical-limiting assembly 140 is placed at an angle β/2 so that reflected light 150 from point 148 on the limiting assembly 140 does not re-enter the optical system.

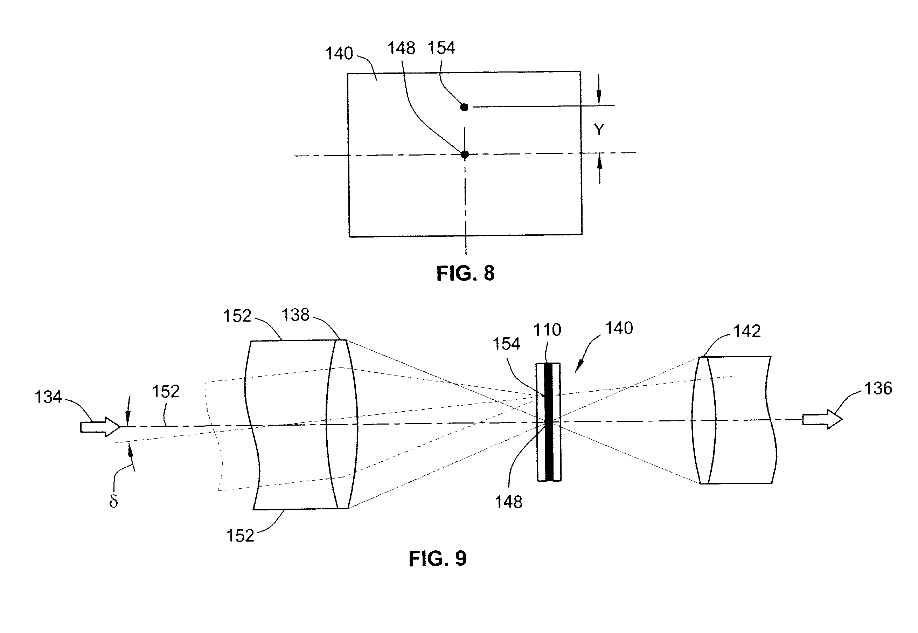

FiGs. 8 and 9 illustrate the mechanism of protection via optical limiting of the embodiment of FIG. 6. Assuming rays from infinity, such as prime ray 134, a real image is formed on the optical-limiting solid mixture 110. If a laser beam enters at angle δ, the light is focused on the optical-limiting solid mixture at point 154 which is offset from point 148 by a distance Y. The optical limiting occurs only at the point 154 with light scattering out of the optical system. The rest of the image is unimpaired.

It will be evident to those skilled in the art that the invention is not limited to the details of the foregoing illustrated embodiments and that the present invention may be embodied in other specific forms without departing from the spirit or essential attributes thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. A passive optical power limiting window comprising:
a transparent optical input element, focusing the light,
a transparent optical output element, defocusing the light, and
a power-limiting element disposed between said input and output elements for transmitting optical light from said input element to said output element, said optical power-limiting element comprising a light excited optical-limiting solid or liquid mixture that produces excitation at a known wavelength and subsequent absorption in other wavelengths, thereby changing the optical transmission properties of said power-limiting element.

2. The passive optical power limiting window of claim 1, wherein said UV or IR excited optical-limiting solid or liquid mixture comprises UV or IR absorber dispersed in an optically transparent matrix material, that turns absorbing in other wavelength than the exciting wavelength.

3. The passive optical power limiting window of claim 2, wherein said optically transparent matrix material is selected from the group consisting of polymethylmethacrylate and its derivatives, silicones, epoxy resins, glass, sol gel derived material, spin-on glass, polymeric material, and an inorganic glass material

4. The passive optical power limiting window of claim 1, in which said solid or liquid mixture is packaged between two flat transparent plates.

5. The passive optical power limiting window of claim 4, wherein said solid mixture is packaged in between two lenslet arrays having a common focus inside the limiting mixture, or two lenses having a common focus inside the limiting mixture.

6. The passive optical power limiting window of claim 4, wherein said solid mixture is packaged in the vicinity of the focal plane of a solid state (e.g. CCD or CMOS) sensor

7. An optical power-limiting method comprising
directing a light beam having a range of different wavelengths through transparent optical input and output elements on opposite sides of a power-limiting element,
said input element focusing the light beam, and said output element defocusing the light beam,
said input and output elements having a common focus located within said power limiting element, and
said power-limiting element being responsive to an increase in the intensity of certain wavelengths in said light beam to modify the absorption characteristics of said power-limiting element to absorb other wavelengths in said light beam, thereby limiting the optical power transmitted to said output element.

8. The method of claim 7 in which said input and output elements are lenses.

9. The method of claim 8 in which each of said lenses is a microlens array.

10. The method of claim 7 in which said power-limiting element comprises a photochromic material, or an IR excited optical-limiting solid mixture that produces reversible thermal changes in response to light above a predetermined optical power level, or a UV excited optical-limiting solid mixture that produces reversible thermal changes in response to light above a predetermined optical power level, or an IR excited optical-limiting solid mixture dispersed in an optically transparent matrix material.

11. The method of claim 10 in which said photochromic material is dispersed or dissolved in a transparent polymeric material.

12. The method of claim 10 in which said photochromic material exhibits a reversible color change induced by light having a wavelength in at least one of the ultraviolet and infrared ranges, and said color change cause said material to absorb light having wavelengths in the visible portion of the electromagnetic spectrum.

13. The optical power-limiting method of claim 7 in which said modifying of said absorption characteristics is responsive to an increase in said intensity above a predetermined optical power level, and is reversible.

14. The optical power-limiting method of claim 10 in which said optically transparent matrix material is a polymeric material.

15. The optical power-limiting method of claim 7 in which said power-limiting element is disposed between two flat transparent plates.
